# EUROPEAN PATENT APPLICATION

(11) **EP 3 984 930 A1**
(43) Date of publication of application: **20.04.2022**
(21) Application number: 21075014.7
(22) Date of filing: 12.10.2021
(51) Int. Cl.: B65G 69/28

(54) **LOADING RAMP WITH WEIGHT COMPENSATION**

(30) Priority: 14.10.2020 NL 1043819
(71) Applicant: Hörmann Alkmaar BV, 1822 BB Alkmaar (NL)
(72) Inventor: Stroet, Frank, 1704 WL Heerhugowaard (NL); Boczulak, Stanislaw, 59-500 Zlotoryja (PL); Sotnicki, Marcin Szymon, 59-140 Chocanów (PL)
(74) Representative: Koomen, M.J.I.

(57) **Abstract**

Loading ramp (1) for loading platforms, formed by a frame (2) with a bridge plate (3) which at its loading platform side (4) rotatably is connected to the loading platform and at its front side (5) is provided with a retractable and extendable supporting plate (6), that is intended to rest upon the loading floor of a vehicle, which supporting plate is formed by a middle lip (7) and on either side a left side lip (8) and a right side lip (9), whereby the lips are intended to rest upon the loading floor of a vehicle, wherein a supporting element (28) is provided on which the middle lip can rest in a position, which supporting element is provided onto a supporting part, whereby in between the supporting element and the supporting part a spring (30) is provided.

## Description

The present invention relates to a loading ramp for loading platforms, formed by a frame with a bridge plate which at its loading platform side rotatably is connected to the loading platform and at its front side is provided with a retractable and extendable supporting plate, that is intended to rest upon the loading floor of a vehicle, which supporting plate is formed by a middle lip and on either side a left side lip and a right side lip.

Such a loading ramp is known.

With the known loading ramp the weight of the bridge plate with the supporting plate therein is born by a number of two lift cylinders. By means of these lift cylinders the bridge plate is turned upwards. When the vehicle is parked the supporting plate is lowered onto the loading floor of the vehicle.

When the loading and unloading of a truck is the case the middle lip and both the side lips are lowered jointly onto the loading floor of the vehicle.

With smaller delivery vans the width of the loading space does not permit this and only the middle lip is lowered onto the loading floor.

When loading the vehicle, the vehicle will give way due to the increasing weight and this will sag downwards. The bridge plate turns with this movement and continues to rest on the loading floor of the vehicle.

With heavier vehicles this manner of loading does not pose problems.

With vehicles that are carried out lighter, such as smaller delivery vans, however the drawback can occur, that the weight of the bridge plate and the middle lip and the transport means being moved over the bridge plate is too much for the vehicle.

In connection with this one has developed a provision for the application with the loading and unloading of a lighter vehicle, such as a delivery van, to attain that the weight of the middle lip is not carried in full by the vehicle, but by the lifting cylinders, at the moment it is determined that the middle lip comes to rest on the loading floor of the vehicle.

In practice then still a substantial part of the weight of the middle lip, in any case temporarily, continues to rest on the loading floor of the delivery van.

The invention aims to obviate this drawback of the known loading ramp.

The loading ramp according to the invention to that end is characterized in that a supporting element is provided on which the middle lip can rest in a position, which supporting element is provided onto a supporting part, whereby in between the supporting element and the supporting part a spring is provided.

According to a characteristic of the loading ramp according to the invention the supporting element is formed by a roller.

According to another characteristic of the loading ramp according to the invention the supporting part is formed by a beam.

According to a further characteristic of the loading ramp according to the invention the supporting part or the beam is provided transverse to the path of movement of the middle lip.

According to yet a further characteristic of the loading ramp according to the invention the supporting part or the beam is mounted at the one outer end to the left side lip and with the other outer end is mounted to the right side lip.

Further characteristics and features of the loading ramp according to the invention will be described with reference to the drawings of an example of an embodiment.

Figure 1 shows a perspective view, taken apart, of an example of an embodiment of the loading ramp according to the invention.

The figures 2a, 2b and 2c show a schematic top view of an example of an embodiment of the loading ramp according to the invention.

The figures 3a, 3b and 3c show a schematic bottom view of an example of an embodiment of the loading ramp according to the invention.

The figures 4a, 4b, 4c, 4d and 4e show a detail, respectively top, side and perspective views of a beam applied in the example of an embodiment shown in figure 1.

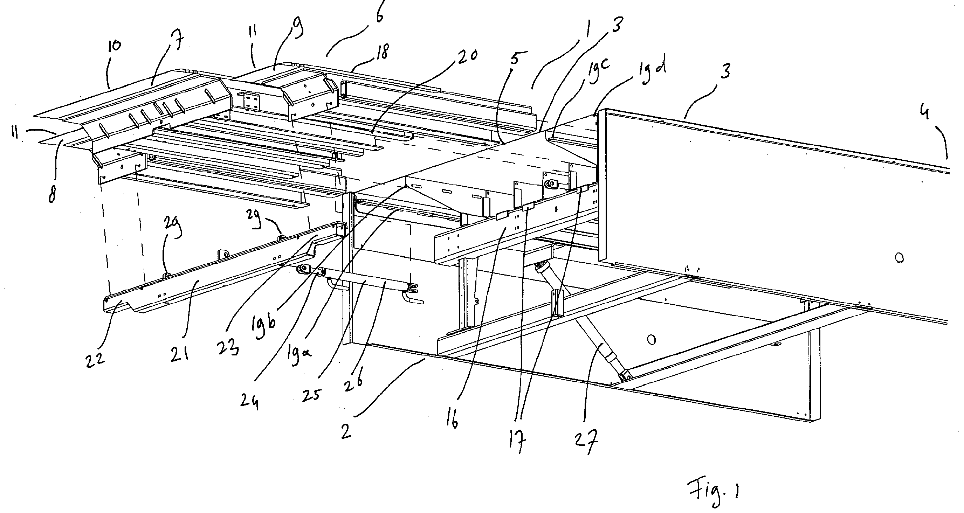

As can be seen in the figures 1, 2 and 3 the loading ramp 1 for a loading platform comprises a frame 2 with a bridge plate 3 which at its loading platform side 4 is rotatably connected to the loading platform and at its front side 5 is provided with a supporting plate 6 that is retractable and extendable in horizontal direction. The supporting plate 6 is formed by a middle lip 7 and on either side a left side lip 8 and a right side lip 9. These are intended to rest upon the loading floor of a vehicle.

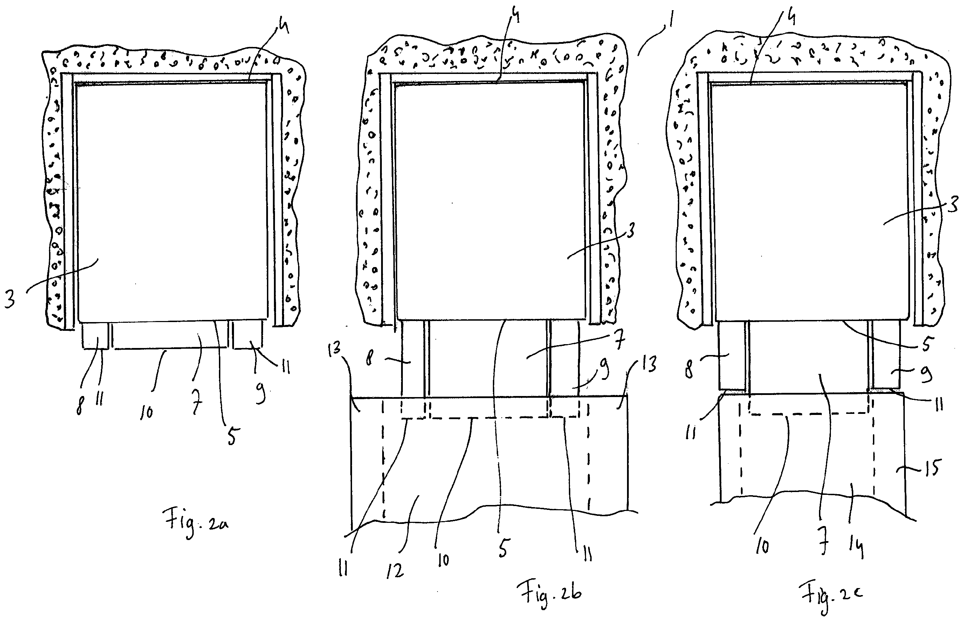

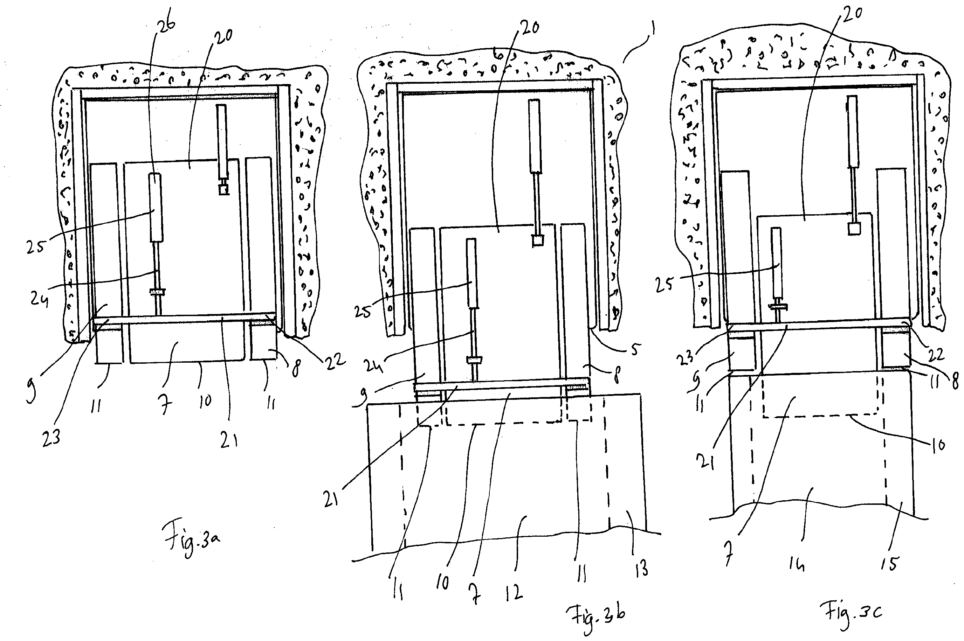

In the figures 2a and 3a the supporting plate 6, for a good understanding of the invention, is shown already pulled out to some extent. When the loading ramp is not in operation, the supporting plate 6 is more or less stored within the bridge plate 3 and from there does not protrude to the front.

The middle lip 7 and the side lips 8 and 9 can be positioned, from a rest position shown in the figures 2a and 3a, in to a first position, shown in the figures 2b and 3b, in which the front edge 10 of the middle lip 7 and the front edges 11 of the side lips 8, 9 find themselves at a substantially same distance relative to the front side 5 of the bridge plate 3. Seen from the left to the right in the figures 2b and 3b the front edge 10 and the front edges 11 run in a more less straight line.

In this position the middle lip 7 and the side lips 8, 9 all rest on the loading floor 12 of a truck 13 (indicated with dotted line in the figures 2b and 3b).

In case of loading and unloading a smaller or narrower delivery van, the middle lip 7 and the side lips 8, 9 are positioned in a second position, shown in the figures 1, 2c and 3c, in which the front edge 10 of the middle lip 7 finds itself at a distance from the front side 5 of the bridge plate 3 that is greater than the distance at which the front edges 11 of the side lips 8, 9 find themselves from the front side 5 of the bridge plate 3. In this position only the middle lip 7 rests upon the loading floor 14 of a delivery van 15 (indicated with dotted line in the figures 2c and 3c).

The bridge plate 3 is provided with a transverse beam 16, shown in figure 1 (not shown in the figures 3a-3c), which supports the supporting plate 6 in the bridge plate and on which the supporting plate 6 can be slid in and slid out in horizontal direction. The transverse beam 16 to that end is provided with sliding strips 17.

During this sliding in and sliding out movement, the side lips 8, 9 are guided at their side edges 18 in the bridge plate 3 by guides 19a, 19b, 19c and 19d provided in the housing of the bridge plate 3.

The transverse beam 16 at the same time constitutes a pivoting point along which the middle lip 7 can turn in the bridge plate 3 from out of a position in which the back side 20 of the middle lip 7 runs downwards and the front edge 10 of the middle lip runs upwards to into a position in which the back side 20 of the middle lip 7 runs upwards and the front edge 10 of the middle lip 7 runs downwards. In this last position the middle lip 7 tends to rest on the loading floor of the vehicle.

As can further be seen in the figures 1, 3a, 3b and 3c in the shown example of an embodiment a supporting part in the form of a beam 21 is provided, which beam 21 with the one outer end 22 is mounted underneath the left side lip 8 and with the other outer end 23 is mounted underneath the right side lip 9. The beam 21 extends underneath the middle lip 7. The middle lip 7 rests loose on the beam 21.

Further, to the beam 21 is mounted a cylinder rod 24 of an hydraulic cylinder 25, the housing 26 of which is mounted to the bottom side of the middle lip 7. In operation the cylinder 25 is in principle completely extended (figures 2b and 3b) and the side lips 8, 9 with the middle lip 7 come forward from out of the front side 5 of the bridge plate 3 in the direction of the vehicle that is to be loaded and unloaded, the moment the supporting plate 6 is slid out.

During loading and unloading of a delivery van the cylinder 25 is retracted whereby this pulls the beam 21 backwards, in the direction of the loading platform. The side lips 8, 9 mounted to the beam 21 go along with this movement, after which the middle lip 7 protrudes forward alone relative to the side lips 8, 9. The middle lip 7 can then be lowered on to the narrower loading floor 14 of a delivery van 15.

In order to attain, that the weight of the middle lip 7 and the side lips 8, 9 and the bridge plate 3 is not born in full by the delivery van, but by the lifting cylinders 27 for the bridge plate 3, in the shown example of an embodiment a sensor is provided onto the beam 21. When the middle lip 7 comes to rest on the loading floor 14 of the delivery van, the middle lip 7 is lifted from the beam 21. The distance that thereby comes about between the bottom side of the middle lip 7 and the beam 21 is detected by the sensor and this generates a signal, by means of which by way of a controlling device the drive of the lifting cylinders 27 is operable, such that the movement downwards of the bridge plate 3 is stopped.

Then still, in any case for a time period, a substantial part of the weight of the middle lip 7 rests on the loading floor 14 of the delivery van 15.

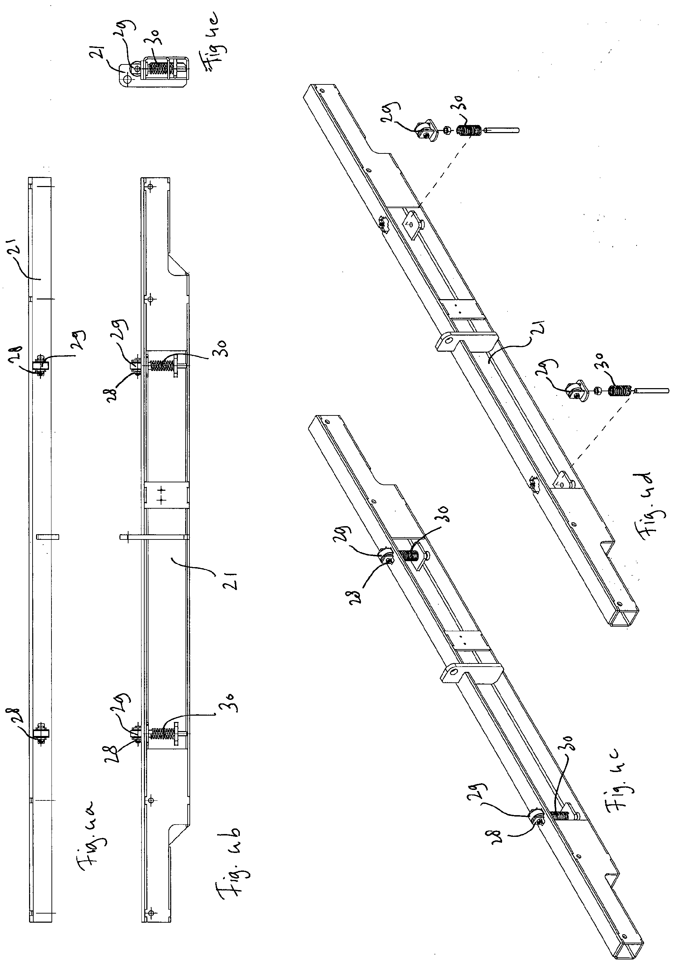

To minimize this, onto the beam 21 the two supporting elements 28, in this example of an embodiment two rollers 29, are provided onto which the middle lip 7 can rest loose in the rest position. Further these rollers 29 are provided onto the compression springs 30, that is to say these compression springs 30 are provided in between the rollers 29 and the beam 21, as can be seen in the detail shown in figure 4e.

Normally the middle lip 7 lies onto the two rollers 29 that are provided onto the beam 21.

When the middle lip comes to rest on the loading floor 14 of the delivery van 15 the middle lip 7 is lifted a length upwards from the beam 21 by that floor 14 . This middle lip 7 then is no longer supported by the beam 21. However, by the compression springs 30 the rolls 29 are pushed a length upwards and the beam 21 continues to support the middle lip 7 indirectly by way of the springs 30 and the rollers 29.

In the shown example of an embodiment the supporting part onto which the rollers 29 and the springs 30 are provided is formed by the beam 21 with thereon at the same time the cylinder rod 24 of the cylinder 25 by means of which the side lips are retracted relative to the middle lip. This obviously is not necessary, the supporting part may be formed by a component being provided separately from the beam 21.

The compression spring 30 or compressions springs 30 have a sufficient weakness to already be compressed, more in particular already be substantially compressed, when the full weight of only the middle lip 7 rests on the supporting element or the supporting elements 28.

At the same time the compression spring 30 or compressions springs 30 are sufficiently strong or stiff to spring outwards, when the middle lip 7 comes to rest on the loading floor 14 of the delivery van 15 but the supporting element or the supporting elements 28 do still bear a part of the weight of the middle lip 7. The middle lip 7 then still is pushed temporarily upwards by the spring or springs 30, so that the full weight of the middle lip 7 does not directly rest on the loading floor 14, and there is sufficient time for the operation of the lifting cylinders to take over the weight of the middle lip.

## Claims

1. Loading ramp for loading platforms, formed by a frame with a bridge plate which at its loading platform side rotatably is connected to the loading platform and at its front side is provided with a retractable and extendable supporting plate, that is intended to rest upon the loading floor of a vehicle, which supporting plate is formed by a middle lip and on either side a left side lip and a right side lip, whereby the lips are intended to rest upon the loading floor of a vehicle, **characterized in that** a supporting element is provided on which the middle lip can rest in a position, which supporting element is provided onto a supporting part, whereby in between the supporting element and the supporting part a spring is provided.

2. Loading ramp according to claim 1, **characterized in that** the supporting element is formed by a roller.

3. Loading ramp according to claim 1 or 2, **characterized in that** the supporting part is formed by a beam.

4. Loading ramp according to claim 1, 2 or 3, **characterized in that** the supporting part or the beam is provided transverse to the path of movement of the middle lip.

5. Loading ramp according to one of the preceding claims, **characterized in** the supporting part or the beam is mounted at the one outer end to the left side lip and at the other outer end is mounted to the right side lip.

6. Loading ramp according to one of the preceding claims, **characterized in that** the spring is a compression spring.
